# DEMANDE DE BREVET EUROPEEN

(11) **EP 2 800 072 A2**
(43) Date de publication de la demande: **05.11.2014**
(21) Numéro de dépôt: 14165459.0
(22) Date de dépôt: 22.04.2014
(51) Int. Cl.: G07F 7/00

(54) **Procédé de délivrance par un automate de cartes de téléphonie mobile SIM à abonnement prépayé ou postpayé**

(30) Priorité: 29.04.2013 FR 1353897
(71) Demandeur: Free, Paris 75008 (FR)
(72) Inventeur: Floch, Hugues, 78280 Guyancourt (FR); Cassen, Alexandre, 34090 Montpellier (FR)
(74) Mandataire: Dupuis-Latour, Dominique

(57) **Abrégé**

Le procédé comprend des étapes de : a) sélection sur l'automate (100) des caractéristiques de souscription ; b) exécution d'une transaction bancaire dans un environnement sécurisé spécifique (112) au sein de l'automate, avec lecture d'une carte bancaire (116) et vérification du PIN, puis génération par un système d'information bancaire (400) d'un ordre de prélèvement bancaire et d'un acquittement autorisant la poursuite de la transaction ; c) génération d'un jeton crypté justifiant l'acquittement ; d) extraction et lecture d'une carte SIM (110) depuis un stock conservé dans l'automate ; e) interrogation du système d'information de l'opérateur de réseau (200) ; f) attribution d'un numéro d'appel et activation de la ligne associée à ce numéro ; g) vérification par l'automate de la bonne lecture du numéro de série ICCID de la carte SIM ; et h) confirmation à l'utilisateur de l'activation immédiate de la ligne téléphonique, avec présentation du numéro d'appel attribué par l'opérateur de réseau. La carte SIM est prête à l'usage à la sortie de l'automate sans autre intervention de l'abonné.

## Description

L'invention concerne la délivrance des cartes SIM de téléphonie mobile à des utilisateurs.

Par "cartes de téléphonie", "cartes SIM", ou "cartes" sans autre précision (et par opposition notamment aux "cartes bancaires" CB), on entendra les cartes à microprocesseur telles que les cartes de type normalisé UICC délivrées par les opérateurs de téléphonie mobile, qui sont destinées à être insérées dans un terminal mobile, par exemple un téléphone portable ou une tablette numérique, pour faire fonctionner ce terminal en le couplant à un réseau de téléphonie sans fil.

Ces cartes SIM, qui sont associées à un numéro d'appel de ligne téléphonique, peuvent être soit des cartes dites "prépayées" offrant pour un montant fixe un crédit de communication associé à la ligne téléphonique (ce crédit pouvant être si besoin rechargé dans une phase ultérieure), soit des cartes "avec abonnement par prélèvement" impliquant des paiements récurrents, généralement mensuels, dont les montants peuvent varier d'un mois sur l'autre en fonction des consommations du mois écoulé.

Les cartes SIM peuvent être distribuées aux utilisateurs de plusieurs manières.

Un premier mode de distribution est la voie postale, par exemple après validation d'une souscription effectuée par l'utilisateur sur Internet auprès du site de l'opérateur téléphonique. Ce mode de distribution comporte plusieurs inconvénients, notamment le délai de préparation de la commande contenant la carte SIM et d'expédition au destinataire, ainsi que tous les aléas propres à l'activité logistique classique et à la distribution : échecs de distribution par le transporteur, risques de vol et de perte, erreurs ou retards dans la chaine logistique, etc. susceptibles d'interrompre ou de retarder l'activation et l'utilisation de la ligne à laquelle l'utilisateur s'est abonné.

Un autre mode de distribution est celui opéré via un réseau de boutiques appartenant à l'opérateur ou à un franchisé. Dans ce cas, la délivrance de la carte SIM peut être immédiate, mais cette manière de procéder comporte également des inconvénients, notamment les coûts d'ouverture de boutiques nouvelles et d'exploitation de celles déjà en place.

Un autre mode de distribution encore fait intervenir des relais ou commerces externes de type tabac, kiosque de presse, caisse de grande surface, etc. où les cartes SIM sont présentées aux utilisateurs potentiels, qui les acquièrent auprès du débitant en s'acquittant de leur prix. Ce mode de distribution présente lui aussi des inconvénients tels que les coûts de prestation, la responsabilité du commerçant, etc. De plus, le commerçant devra disposer d'un stockage sécurisé des cartes pour pallier les risques de vol (avec des cartes prépayées, celles-ci sont directement utilisables après toutefois avoir renseigné un numéro figurant sous un pavé à gratter).

Ce dernier mode de distribution, qui est traditionnellement utilisé pour la vente de cartes SIM prépayées, n'est pas destiné ni adapté à la distribution de cartes SIM avec abonnement par prélèvement, dans la mesure où les relais externes ne sont pas en mesure d'associer à une carte SIM un compte d'abonnement à créer auprès d'un opérateur (avec enregistrement de l'identité, de coordonnées bancaires, etc.). À l'inverse, dans l'hypothèse où ces commerces permettraient à un client de souscrire un abonnement, ils ne pourraient pas délivrer la carte SIM personnalisée correspondante immédiatement après la prise de l'abonnement.

Le EP 1 274 048 A2 propose encore un autre mode de distribution, mettant en oeuvre un automate de type "borne interactive". Il s'agit d'un automate comparable à ceux utilisés par exemple pour la délivrance de billets de chemin de fer, de "clés" magnétiques ou électroniques de chambres d'hôtel, etc. Dans la procédure décrite, après que l'utilisateur a sélectionné différentes options et réglé le montant dû au moyen de sa carte bancaire introduite dans l'automate, un mécanisme vient extraire une carte SIM d'un stock de cartes vierges et réalise une opération d'inscription, dans la mémoire de la puce de la carte, des informations qui vont permettre d'activer cette puce et la rendre fonctionnelle.

On notera que, dans l'automate décrit par ce document, les cartes sont stockées dans un état qui ne permet pas leur utilisation telles quelles, afin d'empêcher toute utilisation frauduleuse des cartes SIM stockées dans l'automate en cas de vol avec effraction, ou en cas de détournement de ces cartes au moment du réapprovisionnement du stock de l'automate.

Il est donc nécessaire de prévoir au sein de l'automate un mécanisme spécifique d'inscription de données additionnelles dans la puce de la carte, propre à modifier de façon vérifiable et sécurisée le contenu de la mémoire interne de cette puce.

Un autre problème à résoudre avec un tel système connu est la possibilité de distribuer non seulement des cartes prépayées, mais également des cartes avec abonnement, impliquant non pas (ou non seulement) un paiement immédiat unique, mais des paiements récurrents, ultérieurs, dont les montants peuvent être variables en fonction des services de télécommunication qui auront été utilisés.

En effet, dans le cas d'un paiement unique comme cela est le cas avec un automate conventionnel, la transaction bancaire est opérée dans un environnement spécifique sécurisé avec lecture de la puce de la carte bancaire, l'introduction d'un numéro d'identification personnel PIN généralement sur un clavier distinct, et l'échange de données cryptées entre un module applicatif sécurisé (SAM) gérant tous les aspects cryptographiques et d'authentification de la communication entre la carte bancaire et l'automate, d'une part, et le système d'information (SI) de la banque de l'utilisateur, d'autre part.

La transaction bancaire est ainsi parfaitement sécurisée de bout en bout dans cet environnement "réel", impliquant des moyens matériels et logiciels de lecture et de vérification physique de la carte bancaire.

Dans un schéma d'abonnement avec paiements récurrents, les impératifs de sécurité sont différents. En effet, dans l'exemple classique d'une souscription en ligne par Internet auprès de l'opérateur téléphonique, cet abonnement est souscrit dans un environnement privé, distinct de la banque de l'utilisateur, en général sur une plateforme informatique de vente à distance (vente en ligne) propre à l'opérateur de réseau ou à un prestataire de vente en ligne.

Ce second type d'environnement est un environnement dit "virtuel" dans la mesure où il ne prévoit pour le paiement aucune lecture physique de la carte bancaire, dont la puce n'est pas utilisée. La transaction est réalisée par saisie du numéro de carte embossé sur celle-ci, de sa date d'expiration ainsi que des trois chiffres du code de sécurité dit "cryptogramme visuel" imprimé au dos de la carte. Ces informations permettent à la plateforme de vente à distance d'accéder aux données bancaires de l'utilisateur, par un échange de données entre cette plateforme, le SI bancaire du vendeur et celui du client.

Or, dans un système de paiement d'un produit ou d'un service par automate, le vendeur (en l'espèce l'opérateur téléphonique) n'a pas accès aux données bancaires, car dans l'"environnement réel" spécifique mettant en oeuvre une lecture physique de la puce de la carte bancaire et l'introduction du PIN sur un clavier, les informations circulent dans un mode totalement crypté entre l'automate et le SI bancaire, ce dernier se contentant de retourner un certificat indiquant que la carte est valide et que le paiement a pu être effectué de façon correcte, mais sans que l'automate n'ait accès aux données bancaires de l'utilisateur, qui restent donc inconnues du vendeur.

La simple distribution de cartes SIM par un automate pourvu d'un module de sécurité avec lecteur de carte bancaire et vérification du PIN ne permet donc pas à l'opérateur de proposer un abonnement durable avec prélèvements bancaires réguliers, puisque le module bancaire n'autorise qu'un paiement unitaire et ne communique pas à l'automate les données bancaires de l'utilisateur.

L'un des buts de la présente invention est de proposer une architecture de système permettant de faire cohabiter les deux environnements bancaires décrits plus haut (environnement "réel" avec lecture physique de la puce de la carte bancaire et contrôle du PIN, et environnement "virtuel" via une plateforme de vente à distance, sans lecteur physique) de manière que l'automate puisse proposer à l'utilisateur aussi bien un contrat prépayé simple qu'un contrat avec abonnement, et lui délivrer immédiatement la carte SIM appropriée correspondant à son choix.

En d'autres termes, l'un des buts de l'invention est proposer un système qui combine dans un même appareil physique (l'automate) des moyens permettant la souscription :
- aussi bien d'un abonnement de type *pre-paid* (prépayé), avec paiement préalable donnant doit par exemple à un quota, éventuellement rechargeable, de temps de communication,
- que d'un abonnement de type *post-paid* (par prélèvement), où le client sera facturé ultérieurement en fonction de l'usage de sa ligne, avec, dans l'un ou l'autre cas, délivrance immédiate et fiable d'une carte SIM entièrement configurée correspondant au choix de l'utilisateur.

Au surplus, le caractère universel du système autorise la souscription via l'automate d'autres contrats proposés par le même prestataire, par exemple la souscription d'un contrat de fourniture d'accès Internet ou d'options payantes à des contrats d'abonnement déjà existants.

Le système peut être également utilisé dans un "canal mixte" :
- soit pour une prise d'abonnement où dans une première étape l'utilisateur souscrit un abonnement de manière classique par Internet, puis choisit de retirer la carte SIM sur n'importe quel automate du système selon l'invention, au lieu de recevoir celle-ci par courrier,
- soit pour une prise d'abonnement où dans une première étape l'utilisateur souscrit un abonnement directement depuis n'importe quel automate puis choisit de modifier son abonnement via une plateforme de vente à distance.

Pour atteindre les buts précités, l'invention propose un procédé de délivrance de cartes SIM de téléphonie mobile par un automate du type général divulgué par le EP 1 274 048 A2 précité.

De façon caractéristique de l'invention, les cartes sont stockées dans l'automate sous forme préactivée, chacune étant utilisable en l'état après avoir été associée à un numéro d'appel téléphonique, et sans personnalisation par inscription de données additionnelles dans la carte SIM lors de la délivrance.

Le procédé de l'invention comprend alors l'exécution des différentes étapes énoncées dans la partie caractérisante de la revendication 1 annexée.

Les sous-revendications visent des formes avantageuses de mise en oeuvre de ce procédé, notamment dans le cas où l'on souhaite subordonner la délivrance de la carte SIM à la souscription d'un abonnement de type "postpayé" impliquant des prélèvements bancaire ultérieurs, par exemple mensuels, correspondant à l'utilisation qui aura été faite de la ligne téléphonique pendant un intervalle donné.

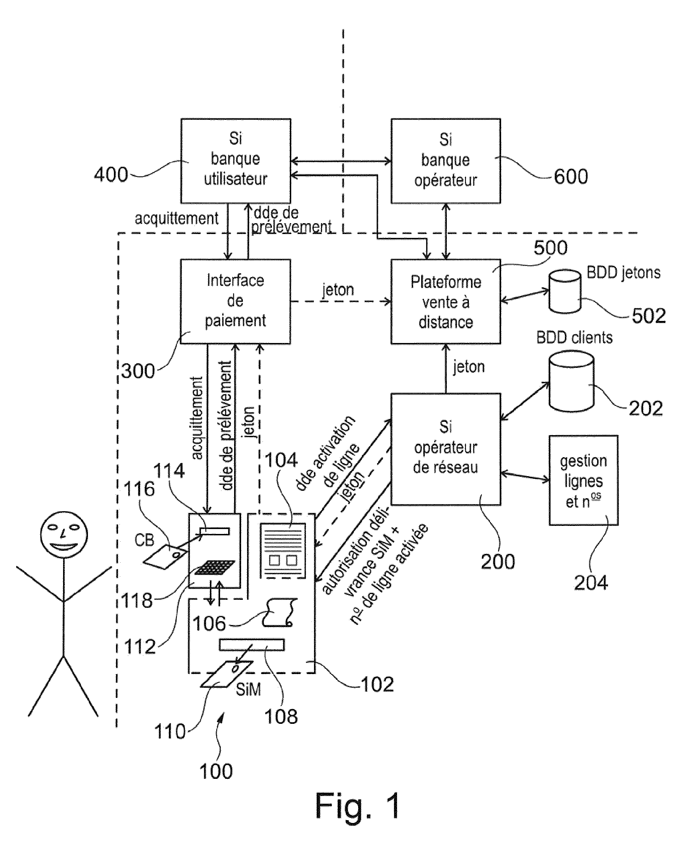

La Figure 1 annexée illustre, sous forme schématique de blocs fonctionnels, les différents éléments mis en oeuvre par le système de l'invention.

Sur la figure, la référence 100 désigne un automate de paiement et de délivrance d'articles à des utilisateurs, après que ceux-ci ont effectué un règlement au moyen d'une carte bancaire (CB).

Plus précisément, l'automate 100 se présente sous la forme d'une borne autonome 102 pourvue d'un écran d'affichage 104 (de préférence un écran tactile permettant également la sélection et l'entrée de commandes), d'une imprimante permettant de délivrer des coupons 106, et de moyens de stockage et de distribution 108 de cartes à microprocesseur de téléphonie mobile ou cartes SIM 110, destinées à être ensuite incorporées à un terminal mobile de l'utilisateur, tel qu'un téléphone portable, une tablette numérique, etc.

L'automate 100 est en outre pourvu d'un module de paiement sécurisé 112 de type module applicatif sécurisé (SAM), apte à gérer tous les aspects cryptographiques et d'authentification de la communication entre la carte bancaire et l'automate, d'une part, et le système d'information (SI) de la banque de l'utilisateur, d'autre part. Ce module sécurisé 112 comprend un lecteur 114 de carte bancaire 116 et un clavier 118 pour l'introduction d'un code d'identification personnel de type "code PIN". L'automate 100 est par ailleurs pourvu de moyens (non représentés) d'alimentation en énergie (incluant un onduleur de secours capable de terminer une transaction en cours en cas de panne d'énergie), ainsi que de communication à distance avec des serveurs distants, avantageusement des moyens de communication sans fil de type téléphonie mobile 3G pour rendre l'automate entièrement autonome et aisée à installer en tous lieux.

L'automate 100 peut être également pourvu d'un dispositif de numérisation de documents, au cas où il serait nécessaire de scanner au moment de la souscription des pièces justificatives telles que document d'identité, relevé d'identité bancaire, etc.

L'automate 100 communique avec un SI de l'opérateur de réseau de téléphonie mobile 200, qui comprend tous les éléments nécessaires à la gestion d'un ensemble de lignes de téléphonie mobile, en particulier une base de données de clients 202 et un module 204 de gestion des lignes et des numéros de téléphone, propre à assurer l'activation d'une ligne de téléphonie mobile et à associer à cette ligne un numéro d'appel prédéterminé. On notera que le numéro d'appel attribué à une ligne lors de son activation peut être aussi bien un nouveau numéro généré par l'opérateur de réseau, qu'un numéro préexistant propre à l'utilisateur, que celui-ci aura préalablement fait transmettre par un autre opérateur de réseau dans le cadre d'une "demande de portabilité".

Le système comprend également une interface de paiement 300, gérée pour le compte de l'opérateur de réseau et permettant notamment de transmettre au SI de la banque de l'utilisateur 400 une demande de prélèvement après vérification par le module de paiement sécurisé 112 de l'automate 100 - ceci dans le cadre d'un environnement bancaire de paiement de type "environnement réel" exposé en introduction, avec lecture physique de la puce de la carte bancaire et contrôle du PIN.

L'opérateur de réseau dispose également d'une plateforme de vente à distance 500, par exemple de type SIPS (*Secure Internet Payment System*) interfacée avec le SI de la banque de l'opérateur 600 - ceci dans le cadre d'un environnement bancaire de paiement de type "environnement virtuel" exposé en introduction, sans lecture physique de la carte ni contrôle du PIN.

La mise en oeuvre du système que l'on vient de décrire est opérée de la manière suivante.

L'utilisateur se présente devant l'automate 100 et sélectionne sur l'écran 104 les caractéristiques de l'abonnement téléphonique qu'il souhaite souscrire : prépayé ou postpayé, avec attribution d'un nouveau numéro ou bien réutilisation d'un numéro existant après portabilité, format de la carte SIM à délivrer, formule choisie parmi différents tarifs, etc.

Après validation, l'automate déclenche l'exécution d'une transaction bancaire de paiement, par l'intermédiaire du module sécurisé 112. L'utilisateur introduit sa carte bancaire 116 dans le lecteur de ce module puis tape son PIN, qui est vérifié ; en cas de concordance, une demande de prélèvement est adressée à sa banque 400 via l'interface de paiement 300. Après vérification par la banque (absence d'opposition, provision suffisante sur le compte, etc.), le SI de la banque de l'utilisateur 400 retourne à l'automate 100 un acquittement, via l'interface de paiement 300, indiquant que la demande de prélèvement a été effectivement prise en compte et validée.

L'automate 100 adresse alors au SI de l'opérateur de réseau 200 une demande d'activation de ligne téléphonique, exécutée par le module 204 de gestion des lignes qui attribue à la ligne un numéro d'appel dans une liste de numéros disponibles (éventuellement un numéro choisi par l'utilisateur dans une liste qui lui a été présentée sur l'écran de l'automate), ou bien lui associe un numéro d'appel préexistant ayant fait l'objet d'une demande de portabilité par l'utilisateur.

Une autorisation de délivrance de la SIM est envoyée en retour à l'automate, ainsi qu'une indication du numéro de la ligne activée. L'automate 100 extrait alors une carte 110 de son stock, scanne son numéro de série ICCID pour association avec le numéro de ligne, et lui délivre un coupon 106 confirmant la bonne exécution de la transaction et lui communiquant le numéro d'appel de la ligne qui a été activée (numéro d'appel en clair MSISDN, *Mobile Station ISDN Number*) afin qu'il puisse en prendre connaissance s'il s'agit d'un nouveau numéro.

Il est possible d'adapter l'automate à la délivrance de cartes SIM sous plusieurs formats ("mini SIM", "micro SIM", etc. selon le type de terminal mobile utilisé) en fonction d'un choix formulé par l'utilisateur.

Dans le cas d'un abonnement faisant l'objet d'un transfert de numéro existant, il conviendra que l'abonné garde son ancienne carte SIM le temps que la portabilité du numéro depuis l'ancien opérateur de réseau soit effective (typiquement quelques jours). En variante, le nouvel opérateur pourrait également lui attribuer un numéro provisoire utilisable pendant cette période transitoire.

On notera que la délivrance se fait sans qu'il y ait lieu d'inscrire des informations spécifiques dans la carte SIM avant sa délivrance, celle-ci étant utilisable telle quelle, sans personnalisation auprès d'un serveur spécifique de l'opérateur.

Cette particularité n'est pas un inconvénient à l'égard d'un risque de vol de cartes dans l'automate ou lors du réapprovisionnement de ce dernier, dans la mesure où les cartes SIM stockées dans l'automate n'ont aucune valeur marchande puisqu'elles ne correspondent à aucune ligne téléphonique activée par l'opérateur, cette activation n'ayant lieu qu'au moment de la délivrance et après accomplissement des diverses vérifications et opérations préalables que l'on vient d'exposer.

Par ailleurs, avant la délivrance proprement dite de la carte SIM, l'automate vérifie la bonne lecture du numéro de série ICCID, la délivrance n'intervenant alors qu'en cas de résultat positif de ce test final. Si le test révèle une carte défectueuse, celle-ci est simplement mise au rebut et une nouvelle carte est délivrée à l'utilisateur.

En tout état de cause, l'identifiant de la carte SIM qui a été effectivement délivrée (numéro de série ICCID (*Integrated Circuit card Identifier*) de la carte, contenu dans une mémoire du microprocesseur de celle-ci) est communiqué à l'opérateur de réseau 200 au moment de la délivrance, de manière que cet identifiant de carte puisse être associé au numéro de la ligne qui a été activée (numéro IMSI, *International Mobile Subscriber Identity*), dans la base de données clients 202.

On notera que l'identifiant de carte ICCID est non seulement mémorisé dans la puce de la carte SIM, mais est également gravé ou imprimé sur celle-ci au moment de la fabrication, de sorte qu'il peut être aisément lu par un scanneur au moment de la délivrance finale, sans qu'il soit nécessaire d'accéder électriquement à la puce de la SIM.

Le mode de paiement que l'on vient de décrire, qui met en oeuvre un environnement sécurisé avec module spécifique 112 et lecteur de carte bancaire 116 via une interface de paiement 300, est une configuration bancaire spécifique n'autorisant que les paiements ponctuels, mais pas les paiements ultérieurs ou récurrents.

Or, dans le cas d'un abonnement de type "postpayé", il est nécessaire de prévoir des prélèvements réguliers, par exemple mensuels, correspondant à l'utilisation qui aura été faite de la ligne téléphonique pendant un intervalle donné, par exemple chaque mois (à la différence des abonnements de type "prépayés", où un paiement ponctuel immédiat, unique, procure à l'utilisateur un crédit de consommation téléphonique à consommer).

Les paiements futurs ou récurrents ne peuvent être mis en oeuvre, du point de vue de la règlementation imposée par les banques, que par l'intermédiaire de transactions de vente à distance ne mettant pas en oeuvre la puce de la carte bancaire ni la vérification du code PIN.

Ce mode de paiement est basé sur d'autres impératifs de sécurité, et n'utilise que les informations embossées sur la carte (numéro de carte, date d'expiration, etc.), immédiatement apparentes, ainsi que le code de sécurité imprimé au dos de celle-ci. Ces informations permettent à la plateforme de vente à distance d'accéder aux données bancaires de l'utilisateur (qui ne sont pas connues du vendeur) via un échange de données sécurisé entre cette plateforme, le SI de la banque du vendeur et le SI de la banque du client.

Ces données bancaires ne sont pas connues du vendeur (en l'espèce, de l'opérateur de réseau) et n'ont pas vocation à l'être. Il n'est de ce fait pas possible, à partir des seules données obtenues lors d'une transaction de paiement via un automate 100 tel que l'on vient de la décrire, de générer des demandes ultérieures de prélèvement bancaire.

Pour résoudre ce problème, de façon caractéristique de l'invention il est prévu de générer un "jeton", essentiellement constitué d'une information d'identité de l'utilisateur, au moment où l'automate 100 accède au SI de l'opérateur de réseau 200 sous le contrôle de l'utilisateur. Ce jeton est généré par le SI de l'opérateur de réseau 200 et retourné à l'automate 100. Il est ensuite transféré par cet automate 100 à l'interface de paiement 300, par exemple en tant que paramètre additionnel de la demande de prélèvement bancaire au moment où l'utilisateur saisit son code PIN de carte bancaire. Le jeton, récupéré par l'interface de paiement 300, sera transmis à la plateforme de vente à distance 500 de l'opérateur de réseau, où il sera stocké dans une base de données spécifique de jetons 502.

Pour les paiements ultérieurs, seule la plateforme de vente à distance 500 sera utilisée, sans intervention de l'interface de paiement 300 (qui n'est destinée à opérer que dans l'environnement bancaire avec lecture physique de la carte bancaire et vérification du PIN par le biais d'un module sécurisé).

La transmission du jeton de l'interface de paiement 300 à la plateforme de vente à distance 500 bénéficie de la sécurisation propre à ces deux éléments, notamment des certifications PCI/DSS (*Payment Card Industry*/*Data Security Standard*) de l'un et de l'autre.

Le jeton, qui comprend une autorisation de prélèvement futur auprès de la banque de l'utilisateur, sera utilisé le moment venu pour générer un ordre de prélèvement bancaire, ceci à partir de la plateforme de vente à distance 500.

## Revendications

1. Un procédé de délivrance par un automate (100) de cartes SIM (110) de téléphonie mobile à microprocesseur à des utilisateurs à l'issue d'une transaction opérée au moyen d'une carte bancaire (116) détenue par un utilisateur, les cartes SIM étant stockées dans au moins un stock de cartes à l'intérieur de l'automate, et contenant chacune dans une mémoire un numéro de série de carte SIM,
***caractérisé en ce que*** les cartes SIM stockées sont des cartes préactivées, chacune utilisable en l'état après avoir été associée à un numéro d'appel téléphonique et sans personnalisation par inscription de données additionnelles dans la carte SIM lors de la délivrance,
*et* ***en* ce *que*** le procédé comprend les étapes suivantes, mises en oeuvre entre l'automate (100), un système d'information bancaire d'une banque de l'utilisateur (400), et un système d'information de l'opérateur de réseau (200) :
a) présentation par l'automate à l'utilisateur, et sélection par celui-ci, des caractéristiques de souscription à un service de téléphonie mobile correspondant à la carte SIM à délivrer ;
b) dans un environnement sécurisé spécifique (112) au sein de l'automate, exécution d'une transaction bancaire comprenant les sous-étapes suivantes :
b1) par l'automate, lecture de la carte bancaire et vérification du numéro d'identification personnel associé à la carte bancaire ;
b2) envoi par l'automate au système d'information bancaire d'un ordre de prélèvement bancaire ;
b3) réception en retour par l'automate d'un acquittement du système d'information bancaire confirmant l'exécution de l'ordre de prélèvement bancaire et autorisant la poursuite de la transaction ;
d) par l'automate, extraction d'une carte SIM depuis le stock de cartes et lecture du numéro de série de cette carte SIM ;
e) par l'automate, interrogation du système d'information de l'opérateur de réseau et envoi à ce système d'information du numéro de série de carte SIM lu à l'étape d) ;
f) par le système d'information de l'opérateur de réseau :
f1) attribution d'un numéro d'appel choisi parmi un ensemble de numéros d'appel disponibles, ou bien d'un numéro d'appel spécifique préexistant propre à l'utilisateur et ayant fait l'objet d'une demande de portabilité auprès de l'opérateur de réseau ;
f2) activation d'une ligne téléphonique avec association du numéro de cette ligne téléphonique au numéro de série de la carte SIM à délivrer ; et
f3) envoi à l'automate du numéro d'appel attribué à l'étape f1) ; et
h) par l'automate :
h1) délivrance de la carte SIM à l'utilisateur, et
h2) confirmation à l'utilisateur de l'activation de la ligne téléphonique, avec présentation du numéro d'appel attribué à l'étape f1).

2. Le procédé de la revendication 1, dans lequel il est en outre prévu, après réception de l'acquittement du système d'information bancaire à l'étape b3), une étape de :
c) génération d'un jeton formant justificatif de la réception à l'étape b3) de l'acquittement du système d'information bancaire, ce jeton comprenant une information d'identité de l'utilisateur,
et comprenant en outre une étape d'envoi à l'opérateur de réseau du jeton généré à l'étape c), pour conservation dans une mémoire.

3. Le procédé de la revendication 2, dans lequel le jeton est généré par une interface de paiement (300) couplée à l'automate pour la mise en oeuvre de ladite transaction bancaire.

4. Le procédé de la revendication 2, dans lequel le jeton comprend en outre une autorisation de prélèvements futurs auprès de la banque de l'utilisateur,
de manière à permettre la souscription d'un abonnement de téléphonie mobile impliquant au moins un paiement futur.

5. Le procédé de la revendication 4, comprenant les étapes ultérieures suivantes, exécutées au moment de chacun des paiements futurs :
i1) récupération par une plateforme de vente à distance (500) du jeton conservé en mémoire ;
i2) par la plateforme de vente à distance, génération d'un ordre de prélèvement bancaire ; et
i3) transmission de l'ordre de prélèvement bancaire à un système d'information bancaire de l'opérateur de réseau (600) pour envoi au système d'information bancaire de la banque de l'utilisateur.

6. Le procédé de la revendication 1, dans lequel il est en outre prévu, avant l'étape h), une étape de :
g) vérification de la bonne lecture par l'automate du numéro de série de la carte SIM,
et dans lequel l'étape h) est exécutée conditionnellement, seulement en cas de conformité avérée à l'étape g).
